(19) Europäisches Patentamt
European Patent Office
Office européen des brevets

(11) Veröffentlichungsnummer: **0 270 950 B1**

(12) **EUROPÄISCHE PATENTSCHRIFT**

(45) Veröffentlichungstag der Patentschrift: **28.06.95**

(51) Int. Cl.[6]: **C08L 69/00**, C08L 51/04, C08L 25/04, C08L 33/10, C08L 35/00

(21) Anmeldenummer: **87117552.7**

(22) Anmeldetag: **27.11.87**

Die Akte enthält technische Angaben, die nach dem Eingang der Anmeldung eingereicht wurden und die nicht in dieser Patentschrift enthalten sind.

(54) **Thermoplastische Formmassen auf Basis spezieller Pfropfpolymerisate.**

(30) Priorität: **09.12.86 DE 3641990**

(43) Veröffentlichungstag der Anmeldung:
**15.06.88 Patentblatt 88/24**

(45) Bekanntmachung des Hinweises auf die Patenterteilung:
**28.06.95 Patentblatt 95/26**

(84) Benannte Vertragsstaaten:
**DE ES FR GB IT NL**

(56) Entgegenhaltungen:
**EP-A- 0 024 644**
**EP-A- 0 111 260**
**EP-A- 0 135 794**
**EP-A- 0 161 452**
**AT-A- 337 992**

(73) Patentinhaber: **BAYER AG**

**D-51368 Leverkusen (DE)**

(72) Erfinder: **Wittmann, Dieter, Dr.**
**Doerperhofstrasse 15**
**D-4150 Krefeld (DE)**
Erfinder: **Lindner, Christian, Dr.**
**Riehlerstrasse 200**
**D-5000 Koeln 60 (DE)**
Erfinder: **Kress, Hans-Jürgen, Dr. c/o Mobay Corporation**
**Plastics and Rubber Division**
**Mobay Road**
**Pittsburgh, PA 15205 (US)**
Erfinder: **Peters, Horst, Dr.**
**Winterberg 25**
**D-5090 Leverkusen 3 (DE)**
Erfinder: **Schoeps, Jochen, Dr.**
**Windmuehlenstrasse 126**
**D-4150 Krefeld (DE)**

**EP 0 270 950 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind thermoplastische Formmassen, bestehend aus
A. 20 bis 95 Gew.-Teilen eines oder mehrerer thermoplastischer Polycarbonate, auf Basis der Diphenole der Formel (II)

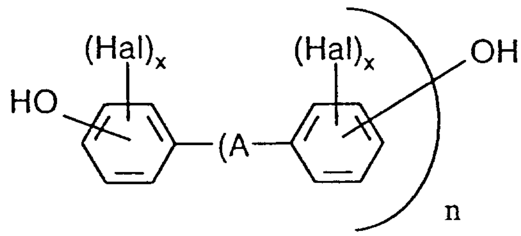

(II)

Worin A eine Einfachbindung, ein $C_1$-$C_5$-Alkylen, ein $C_2$-$C_5$-Alkyliden, ein $C_5$-$C_6$-Cycloalkyliden, -S- oder $-SO_2-$ sind und Hal Chlor oder Brom, x 0, 1 und 2 und n 1 oder 0 bedeuten,
B. 5 bis 60 Gew.-Teilen eines oder mehrerer Pfropfpolymerisate aus
B.1 10 bis 95 Gew.-Teilen einer vernetzten, teilchenförmigen elastomeren Pfropfgrundlage aus einem Dienkautschuk mit einem durchschnittlichen Teilchendurchmesser($d_{50}$-Wert) von 0,05 bis 5 $\mu$m, einer Glasübergangstemperatur $\leqq$ 10 °C und
B.2 90 bis 5 Gew.-Teilen einer Pfropfauflage aus Vinylmonomerpolymerisat, wobei die Pfropfauflage erhalten wurde durch Pfropfpolymerisation einer Monomerenmischung aus
B.2.1 50 bis 95 Gew.-Teilen Styrol, $\alpha$-Methylstyrol, kernsubstituiertem Styrol oder Mischungen daraus,
B.2.2 50 bis 5 Gew.-Teilen (Meth)Acrylnitril, Methylmethacrylat, Maleinsäureanhydrid, N-substituiertem Maleinimid oder Mischungen daraus, sowie, bezogen auf 100 Gew.-Teile der Summe aus B.2.1 und B.2.2,
B.2.4 0,2 bis 8 Gew.-Teilen eines tertiären Butylesters der Acrylsäure oder Methacrylsäure, und gegebenenfalls
B.2.3 2 bis 30 Gew.-Teilen eines primären oder sekundären aliphatischen Acrylsäureesters mit 2 bis 10 C-Atomen im Alkoholteil des Moleküls,
in Gegenwart der Pfropfgrundlage B.1, und gegebenenfalls
C. 0 bis 70 Gew.-Teilen eines thermoplastischen Copolymerisats aus
C.1 50 bis 95 Gew.-Teilen Styrol, $\alpha$-Methylstyrol, kernsubstituiertem Styrol, Methylmethacrylat oder Mischungen daraus, und
C.2 50 bis 5 Gew.-Teilen (Meth)Acrylnitril, Methylmethacrylat, Maleinsäureanhydrid, N-substituiertem Maleinimid oder Mischungen daraus, wobei die Summe der Gew.-Teile aus A. + B. und gegebenenfalls C. jeweils 100 Gew.-Teile beträgt,
Die Verbesserung der Zusammenfließnahtfestigkeit von Mischungen aus thermoplastischen, aromatischen Polycarbonaten, Pfropfpolymerisaten und gegebenenfalls Copolymerisaten ist bereits beschrieben (siehe beispielsweise DE-OS 2 259 565, DE-OS 2 329 548, EP-OS 0 005 202, EP-OS 0 074 112 (Sumitomo Naugatuck Co.) und DE-OS 3 336 369 (Sumitomo Naugatuck Co.). Hierbei sind für die Verbesserung der Zusammenfließnahtfestigkeit jeweils spezielle Bedingungen einzuhalten. Nach DE-OS 2 329 546 sind Dreikomponentenmischungen von Polycarbonaten, Butadienpolymerisaten und Copolymerisaten bekannt, die ebenfalls eine besondere Festigkeit der Zusammenfließnahte haben (Seite 3, letzter Absatz der DE-OS).

Es wurde nun überraschenderweise gefunden, daß Formmassen mit besonders vorteilhafter Kombgination von Fließnahtfestigkeit und Tieftemperaturzähigkeit erhalten werden, wenn man zu ihrer Herstellung Pfropfpolymerisate verwendet, deren Pfropfauflage neben den aus dem Stand der Technik bekannten Pfropfmonomeren bestimmte primäre oder sekundäre Alkylacrylate und/oder tertiäre Butyl(meth)acrylate enthält.

Erfindungsgemäß geeignete Polycarbonate gemäß Komponente A. sind sowohl Homopolycarbonate als auch Copolycarbonate.

Die Herstellung der erfindungsgemäß geeigneten Polycarbonate gemäß Komponente A. ist literaturbekannt und kann beispielsweise mit Phosgen nach dem Phasengrenzflächenverfahren oder mit Phosgen nach dem Verfahren in homogener Phase, dem sogenannten Pyridinverfahren, erfolgen, wobei das jeweils einzustellende Molekulargewicht in bekannter Weise durch eine entsprechende Menge an bekannten Kettenabbrechern erzielt wird. [Bezüglich polydiorganosiloxanhaltigen Polycarbonaten siehe beispielsweise

DE-OS 3 334 872 (Le A 22 594)].

Geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenole mit insgesamt 8 bis 20 C-Atomen in den Alkylsubstituenten gemäß DE-OS 3 506 472 (Le A 23 654) wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethyl-heptyl)-phenol. Die Menge an einzusetzenden Kettenabbrechern beträgt im allgemeinen zwischen 0,5 Mol-% und 10 Mol-%, bezogen auf die Summe der jeweils eingesetzte Diphenole (II) und gegebenenfalls (IIa).

Die erfindungsgemäß geeigneten Polycarbonate gemäß Komponente A. haben mittlere Gewichtsmittelmolekulargewichte ( $\overline{M}_w$ , gemessen beispielsweise durch Ultrazentrifugation oder Streulichtmessung) von 10 000 bis 200 000, vorzugsweise von 20 000 bis 80 000.

Geeignete Diphenole der Formel (II) sind beispielsweise Hydrochinon, Resorcin, 4,4'-Dihydroxydiphenyl, 2,2-Bis-(4-Hydroxyphenyl)-propan, 2,4-Bis-(4-Hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Die erfindungsgemäß geeigneten Polycarbonate gemäß Komponente A. können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Bevorzugte Polycarbonate sind neben dem Bisphenol A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan.

Zur Herstellung der Pfropfpolymerisate gemäß Komponente B. geeignete Kautschuke sind Dienkautschuke, insbesondere Polybutadien, Butadien/Styrol-Copolymerisate mit bis zu 30 Gew.-%, bezogen auf Kautschukgewicht, eines niederen Alkylesters von Acryl- oder Methacrylsäure wie beispielsweise Methylmethacrylat, Ethylacrylat, Methylacrylat oder Ethylmethacrylat.

Die Kautschuke liegen im Pfropfpolymerisat B. in Form wenigstens partiell vernetzter Teilchen einer mittleren Teilchengröße von 0,05 bis 5 µm, insbesondere 0,075 bis 1 µm vor und besitzen Gelgehalte von bevorzugt wenigstens 70 Gew.-%.

Die Pfropfpolymerisate B. werden durch radikalische Pfropfpolymerisation der eingangs genannten Monomerengemische aus B.2.1 und B.2.2 sowie B.2.3 und/oder B.2.4 in Gegenwart der zu pfropfenden Kautschuke B.1 hergestellt.

Bevorzugte Herstellungsverfahren für die Pfropfpolymerisate B. sind Emulsionsö-, Lösungs-, Masse- oder Suspensionspolymerisation.

Die Pfropfauflage B.2 des Pfropfproduktes B. wird beispielsweise durch Polymerisation der entsprechenden Monomeren in Gegenwart eines Latex (Emulsion) der Pfropfgrundlage B.1 erzeugt. Die Polymerisation kann durch Radikalinitiatoren initiiert werden, z.B. mit Persulfaten, Peroxiden, Percarbonaten, Perestern, insbesondere aber mit wasserlöslichen Initiatoren wie Persulfaten oder Redoxinitiatorsystemen. Diese Polymerisationsverfahren sind bekannt.

Erfindungsgemäße Pfropfauflagen B.2 erhält man, indem man neben den nach dem Stand der Technik bekannten Pfropfmonomeren gemäß B.2.1 und B.2.2 zusätzlich Pfropfmonomere gemäß B.2.3 und/oder B.2.4 bei der Pfropfpolymerisation einsetzt.

Obwohl bereits die alleinige Gegenwart von Pfropfcomonomeren gemäß B.2.3 oder B.2.4 in der Pfropfauflage des Pfropfpolymerisate B. zu verbesserten Formmassen führt, sind vor allem bestimmte Gemische aus B.2.3 und B.2.4 besonders wirksam zur Verbesserung von Tieftemperaturzähigkeit und Fließnahtfestigkeit der Formmassen.

Bevorzugte Pfropfauflagen B.2 werden demzufolge erhalten durch Pfropfpolymerisation einer Monomermischung aus B.2.1 50 bis 95 Gew.-Tl. Styrol, $\alpha$-Methylstyrol, kernsubstituiertem Styrol, oder Mischungen daraus, und B.2.2 50 bis 5 Gew.-Tl. (Meth)-Acrylnitril, Methylmethacrylat, Maleinsäureanhydrid, N-substituiertem Maleinimid oder Mischungen daraus, sowie, bezogen auf 100 Gew.-Tl. der Summe aus B.2.1 und B.2.2, B.2.3 3 bis 20 Gew.-Tl. eines primären oder sekundären aliphatischen Acrylsäureesters (mit 2 bis 10 C-Atomen im Alkoholteil des Moleküls), insbesondere Ethylacrylat, Propylacrylat, Butylacrylat, Hexylacrylat, Ethylhexylacrylat, und B.2.4 0,3 bis 4 Gew.-Tl. eines tertiären Butylesters der (Meth)-Acrylsäure, insbesondere t-Butylacrylat.

Bevorzugte Copolmerisate gemäß Komponente C. sind solche aus wenigstens einem Monomeren aus der Reihe Styrol, $\alpha$-Methylstyrol, kernsubstituiertem Styrol gemäß C.1 mit wenigstens einem Monomeren

aus der Reihe Acrylnitril, Methacrylnitril, Methylmethacrylat, Maleinsäureanhydrid, N-substituiertes Maleinimid gemäß C.2.

Thermoplastische Copolymerisate mit einer Zusammensetzung gemäß Komponente B.2 entstehen häufig bei der Pfropfpolymerisation zur Herstellung der Komponente B. als Nebenprodukte, besonders dann, wenn große Mengen Monomere auf kleine Menge Kautschuk gepfropft werden.

Die erfindungsgemäß einzusetzende Menge an Copolymerisat C. von 0 bis 70 Gew.-Tl., vorzugsweise 5 bis 50 Gew.-Tl., bezogen auf 100 Gew.-Tl. aus A. + B. + C., bezieht dieses Nebenprodukt der Pfropfpolymerisation nicht mit ein.

Die Copolymerisate gemäß Komponente C. sind harzartig, thermoplastisch und kautschukfrei. Besonders bevorzugte Copolymerisate C. sind solche aus Styrol und/oder $\alpha$Methylstyrol mit Acrylnitril und gegebenenfalls mit Methylmethacrylat.

Als kernsubstituierte Styrole gemäß B.2.1 und C.1 seien Halogenstyrole und p-Methylstyrol erwähnt.

Besonders bevorzugte Gewichtsverhältnisse im thermoplastischen Copolymerisat C. sind 60 bis 80 Gew.-% C.1 und 40 bis 20 Gew.-% C.2.

Die Copolymerisate gemäß Komponente C. sind bekannt und lassen sich durch radikalische Polymerisation, insbesondere durch Emulsion-, Suspensions-, Lösungs- oder Massepolymerisation herstellen. Die Copolymerisate gemäß Komponente C. besitzen vorzugsweise Molekulargewichte $\overline{M}w$ (Gewichtsmittel, ermittelt durch Lichtstreuung oder Sedimentation) zwischen 15 000 und 200 000 und Grenzviskositäten zwischen 20 und 110 ml/g (gemessen in Dimethylformamid bei 25 ° C).

Die erfindungsgemäßen Formmassen können weitere für Polycarbonate, Pfropfpolymerisate oder thermoplastische Copolymerisate bekannte Zusätze, wie Stabilisatoren, Pigmente, Fließmittel, Entformungsmittel, Flammschutzmittel und Antistatika in den üblichen Mengen enthalten.

Die erfindungsgemäßen Formmassen, enthaltend die Komponenten A., B. und gegebenenfalls C. sowie gegebenenfalls wirksame Mengen an üblichen Stabilisatoren, Pigmenten, Fließmitteln, Entformungsmitteln, Flammschutzmitteln und/oder Antistatika werden hergestellt, indem man die jeweiligen Bestandteile in bekannter Weise vermischt und bei Temperaturen von 200 ° C bis 330 ° C in üblichen Aggregaten, wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Formmassen, enthaltend die Komponenten A., B. und gegebenenfalls C., sowie gegebenenfalls wirksame Mengen an üblichen Stabilisatoren, Pigmenten, Fließmitteln, Entformungsmitteln, Flammschutzmitteln und/oder Antistatika, das dadurch gekennzeichnet ist, daß man die Komponenten A., B. und gegebenenfalls C. sowie gegebenenfalls wirksame Mengen an üblichen Stabilisatoren, Pigmenten, Fließmitteln, Entformungsmitteln, Flammschutzmitteln und/oder Antistatika in bekannter Weise vermischt und danach bei Temperaturen von 200 ° C bis 330 ° C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20 ° C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind einmal Gehäuseteile jeder Art beispielsweise für Haushaltsgeräte, wie Saftpressen, Kaffeemaschinen und Mixer, zum anderen Abdeckplatten für den Bausektor und Teile für den Bausektor und Teile für den Kfz-Sektor. Sie werden außerdem auf dem Gebiet der Elektrotechnik, beispielsweise für Steckerleisten, eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al., Kolloid-Z. und Z. polymere 250 (1972), 782 - 796.

## Beispiele

### 1. Eingesetzte Polykondensate und Polymerisate

A. Lineares Polycarbonat auf Basis Bisphenol A mit einer relativen Lösungsviskosität $\eta$rel von 1,26 bis 1,28, gemessen in $CH_2Cl_2$ bei 25 ° C und einer Konzentration von 0,5 g / 100 ml.

B. Pfropfpolymerisate - Pfropfgrundlagen

B.1.1 Polybutadienlatex, hergestellt durch wäßrige Emulsionspolymerisation, mit einem Feststoffgehalt von 44,3 Gew.-%, einem mittleren Teilchendurchmesser ($d_{50}$-Wert) von 0,4 $\mu$m und einem Gelgehalt von 86,5 Gew.-%.

B.1.2 Polybutadienlatex, hergestellt durch wäßrige Emulsionspolymerisation, mit einem Feststoffgehalt von 40,5 %, einem mittleren Teilchendurchmesser ($d_{50}$-Wert) von 0,1 µm und einem Gelgehalt von 86,2 Gew.-%.

Herstellung der Pfropfpolymerisate B

In einem Reaktor werden Latices der Pfropfgrundlage vorgelegt, so daß 750 Gew.-Tl. Kautschuk eingesetzt werden. Anschließend verdünnt man jeweils mit soviel Wasser, bis sich ein Polymerfeststoffgehalt von 23,6 Gew.-% eingestellt hat. Bei einer Temperatur von 64-66 °C startet man die Polymerisation durch Zugabe einer Lösung von 7,5 Gew.-Tl. Kaliumperoxodisulfat in 195 Gew.-Tl. Wasser.

Danach werden folgende Mengenströme bei 64-66 °C unter Rühren innerhalb von 4 h gleichmäßig in den Reaktor eindosiert:

1. 750 Gew.-Tl. Monomermischung der Zusammensetzung aus Tab. 1
2. 375 Gew.-Tl. Wasser,
   15 Gew.-Tl. Na-Salz der disproportionierten Abietinsäure
   11,5 Gew.-Tl. 1-n-Natronlauge

Nach Beendigung der Zudosierung wird noch bei 65 °C nachpolymerisiert. Nach Stabilisierung des Latex mit 1,6 Gew.-% phenolischen Antioxidantien wird durch Koagulation mittels Essigsäure/$MgSO_4$-Mischung bei Temperaturen von 70-98 °C aufgearbeitet. Nach Waschen und Reinigen der Pfropfpolymerisate wird zum trockenen Pulver aufgearbeitet.

Tabelle 1

| In den Formmassen verwendete Pfropfpolymerisate | | | | | |
|---|---|---|---|---|---|
| Nr. | Pfropfgrundlage 50 Gew.-Tl. | Zusammensetzung der Pfropfmonomere 50 Gew.-Tl. | | | |
| | Typ | S | ACN | n-BA | t-BA |
| I[1]) | B.1.1 | 36,0 | 14,0 | - | - |
| II | B.1.1 | 31,7 | 12,3 | 5 | 1 |
| III | B.1.1 | 35,3 | 13,7 | - | 1 |
| IV[1)] | B.1.2 | 36,0 | 14,0 | - | - |
| V | B.1.2 | 31,7 | 12,3 | 5 | 1 |
| VI | B.1.2 | 35,3 | 13,7 | - | 1 |

S: Styrol
ACN: Acrylnitril
n-BA: n-Butylacrylat
t-BA: t-Butylacrylat

1) Vergleichsbeispiele

c. Styrol/Acrylnitril-Copolymerisat mit einem Styrol/Acrylnitril-Verhältnis von 72:28 und einer Grenzviskosität von $[\eta]$ = 0,55 dl/g (Messung in Dimethylformamid bei 20 °C).

2) Herstellung und Prüfung der Formmassen

Die Compoundierung der Komponenten A., B. und gegebenenfalls C. erfolgte auf einem 3-1-Innenkneter bei Temperaturen von 200 bis 220 °C.

Die Herstellung von Formkörpern erfolgte, soweit nicht anders angegeben, auf einer Spritzgießmaschine bei 260 °C. Die Bestimmung der Kerbschlagzähigkeit erfolgte nach Methode Izod an Stäben der Abmessung 2,5 x 0,5 x 0,125" gemäß ASTM-D-256 bei RT, -20 °C, -40 °C.

Zur Ermittlung der Fließnahtfestigkeit wurde die Schlagzähigkeit nach DIN 53 452 (Charpy-Methode) an der Bindennaht von beidseitig angespritzten Prüfkörpern der Dimension 170 x 10 x 4 mm herangezogen.

Wie nachfolgende Tabelle zeigt, werden nur mit den erfindungsgemäßen Pfropfpolymerisaten Formmassen erhalten, die eine gegenüber dem Stand der Technik verbesserte Fließnahtfestigkeit und Tieftemperaturzähigkeit aufweisen.

Tabelle 2: Zusammensetzung und Eigenschaften der Formmassen

| Beispiel | Komponenten A Gew.-% | Pfropfpolymerisat B Lfd. Nr. (Tab. 1) | B Gew.-% | C Gew.-% | Kerbschlagzähigkeit nach Izod J/m RT | $-20^{0}C$ | $-40^{0}C$ | Fließnahtfestigkeit $kJ/m^2$ |
|---|---|---|---|---|---|---|---|---|
| 1[1)] | 60 | I | 24 | 16 | 584 | 490 | 398 | 4,0 |
| 2 | 60 | III | 24 | 16 | 762 | 617 | 534 | 13,1 |
| 3 | 60 | IV | 24 | 16 | 757 | 609 | 543 | 5,6 |
| 4[1)] | 60 | V | 24 | 16 | 395 | 138 | 104 | 3,4 |
| 5 | 60 | VII | 24 | 16 | 684 | 587 | 507 | 17,4 |
| 6 | 60 | VIII | 24 | 16 | 675 | 562 | 510 | 17,9 |

1) Vergleichsbeispiele

## Patentansprüche

**1.** Thermoplastische Formmassen, bestehend aus

A. 20 bis 95 Gew.-Tl. eines oder mehrerer thermoplastischer Polycarbonate, auf Basis der Diphenole der Formel (II)

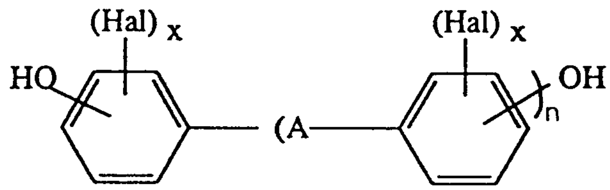

(II)

worin A eine Einfachbindung, ein $C_1$-$C_5$-Alkylen, ein $C_2$-$C_5$-Alkyliden, ein $C_5$-$C_6$-Cycloalkyliden, -S- oder -$SO_2$- sind und
Hal Chlor oder Brom, x 0, 1 oder 2 und n 1 oder 0 bedeuten,
B. 5 bis 60 Gew.-Tl. eines oder mehrerer Pfropfpolymerisate aus
B.1 10 bis 95 Gew.-Tl. einer vernetzten, teilchenförmigen elastomeren Pfropfgrundlage aus einem Dienkautschuk mit einem durchschnittlichen Teilchendurchmesser ($d_{50}$-Wert) von 0,05 bis 5 $\mu$m, einer Glasübergangstemperatur ≦ 10 °C und
B.2 90 bis 5 Gew.-Tl. einer Pfropfauflage aus Vinylmonomerpolymerisat, wobei die Pfropfauflage erhalten wurde durch Pfropfpolymerisation einer Monomerenmischung aus
B.2.1 50 bis 95 Gew.-Tl. Styrol, $\alpha$-Methylstyrol, kernsubstituiertem Styrol oder Mischungen daraus, und
B.2.2 50 bis 5 Gew.-Tl. (Meth)Acrylnitril, Methylmethacrylat, Maleinsäureanhydrid, N-substituiertem Maleinimid oder Mischungen daraus, sowie, bezogen auf 100 Gew.-Tl. der Summe aus B.2.1 und B.2.2
B.2.4 0,2 bis 8 Gew.-Tl.. eines tertiären Butylesters der Acrylsäure oder Methacrylsäure, und gegebenenfalls
B.2.3 2 bis 30 Gew.-Tl. eines primären oder sekundären aliphatischen Acrylsäureesters mit 2 bis 10 C-Atomen im Alkoholteil des Moleküls
in Gegenwart der Pfropfgrundlage B.1, und gegebenenfalls
C. 0 bis 70 Gew.-Tl. eines thermoplastischen Copolymerisats aus
C.1 50 bis 95 Gew.-Tl. Styrol, $\alpha$-Methylstyrol, kernsubstituiertem Styrol, Methylmethacrylat oder Mischungen daraus, und
C.2 50 bis 5 Gew.-Tl. (Meth)Acrylnitril, Methylmethacrylat, Maleinsäureanhydrid, N-substituiertem Maleinimid oder Mischungen daraus, wobei die Summe der Gew.-Tl. aus A. + B. und gegebenenfalls C. jeweils 100 Gew.-Tl. beträgt.

**2.** Formmassen gemäß Anspruch 1, dadurch gekennzeichnet, daß die Komponente C in Mengen von 5 bis 50 Gew.-Tl. eingesetzt wird.

**3.** Formmassen gemäß den Ansprüchen 1 und 2, dadurch gekennzeichnet, daß die Pfropfgrundlage B.1 in Mengen von 20 bis 70 Gew.-Tl. eingesetzt wird, und die Pfropfauflage B.2 aus 80 bis 30 Gew.-Tl. Vinylmonomerpolymerisat B.2.1 bis B.2.4 besteht.

**4.** Formmassen gemäß den Ansprüchen 1 bis 3, dadurch gekennzeichnet, daß die Pfropfgrundlage B.1 aus vernetzten Elastomerteilchen mit einem durchschnittlichen Teilchendurchmesser von 0,075 bis 1 $\mu$m und einer Glasübergangstemperatur ≦ -20 °C besteht.

**5.** Formmassen gemäß den Ansprüchen 1 bis 4, dadurch gekennzeichnet, daß Komponente B.1 Polybutadien oder Butadien/Styrol-Copolymerisate ist.

**6.** Formmassen gemäß den Ansprüchen 1 bis 4, dadurch gekennzeichnet, daß Komponente B.1 Polybutadien ist.

**7.** Formmassen gemäß den Ansprüchen 1 bis 6, dadurch gekennzeichnet, daß die Pfropfauflage B.2 3 bis 20 Gew.-Tl. B.2.3 und 0,3 bis 4 Gew.-Tl B.2.4 enthält, bezogen auf 100 Gew.-Tl. B.2.1 und B.2.2.

**8.** Formmassen gemäß den Ansprüchen 1 bis 7, dadurch gekennzeichnet, daß Komponente B.2.3 n-Butylacrylat und Komponente B.2.4 tert.-Butylacrylat ist.

**9.** Formmassen gemäß den Ansprüchen 1 bis 8, dadurch gekennzeichnet, daß sie zusätzlich mindestens einen Zusatz aus der Gruppe der Stabilisatoren, Pigmente, Fließmittel, Entformungsmittel, Flammschutzmittel und Antistatika enthalten.

**10.** Verfahren zur Herstellung der Formmassen gemäß der Ansprüche 1 bis 9, wobei man die Komponenten A., B. und gegebenenfalls C. in bekannter Weise vermischt und danach bei Temperaturen von 200 °C bis 330 °C in gebräuchlichen Aggregaten schmelzcompoundiert oder schmelzextrudiert.

**11.** Verfahren zur Herstellung der Formmassen des Anspruchs 9 gemäß Anspruch 10, wobei man mindestens einen Zusatz aus der Gruppe der Stabilisatoren, Pigmente, Fließmittel, Entformungsmittel, Flammschutzmittel und Antistatika einbezieht.

**Claims**

**1.** Thermoplastic moulding materials, consisting of

A. 20 to 95 parts by weight of one or more thermoplastic polycarbonates, based on diphenols of formula (II)

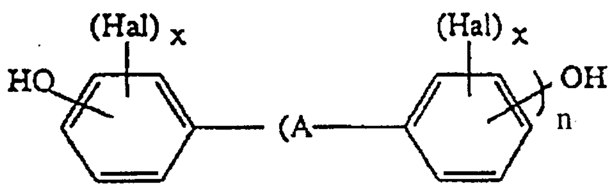

(II)

where A is a single bond, a $C_1$-$C_5$ alkylene, a $C_2$-$C_5$ alkylidene, a $C_5$-$C_6$ cycloalkylidene, -S- or $-SO_2-$, and

Hal denotes chlorine or bromine, x denotes 0, 1 or 2, and n denotes 1 or 0,

B. 5 to 60 parts by weight of one or more graft polymers comprising

B.1 10 to 95 parts by weight of a crosslinked, particulate, elastomeric graft base comprising a diene rubber with an average particle diameter ($d_{50}$ value) of 0.05 to 5 $\mu$m and a glass transition temperature ≦ 10 °C, and

B.2 90 to 5 parts by weight of a superimposed graft layer of a polymerised vinyl monomer, wherein the superimposed graft layer was obtained by the graft polymerisation of a mixture of monomers comprising

B.2.1 50 to 95 parts by weight of styrene, $\alpha$-methylstyrene, a styrene with a substituted nucleus, or mixtures thereof, and

B.2.2 50 to 5 parts by weight of (meth)acrylonitrile, methyl methacrylate, maleic anhydride, an N-substituted maleic imide or mixtures thereof, as well as the following, the amounts of which are based on 100 parts by weight of the sum of B.2.1 and B.2.2:

B.2.4 0.2 to 8 parts by weight of a tertiary butyl ester of acrylic acid or methacrylic acid, and optionally

B.2.3 2 to 30 parts by weight of a primary or secondary aliphatic acrylic acid ester having 2 to 10 C atoms in the alcohol part of its molecule

in the presence of the graft base B.1, and optionally

C. 0 to 70 parts by weight of a thermoplastic copolymer comprising

C.1 50 to 95 parts by weight of styrene, $\alpha$-methylstyrene, a styrene with a substituted nucleus, methyl methacrylate or mixtures thereof, and

C.2 50 to 5 parts by weight of (meth)acrylonitrile, methyl methacrylate, maleic anhydride, an N-substituted maleic imide or mixtures thereof, wherein the sum of the parts by weight of A + B and optionally C is 100 parts by weight in each case.

**2.** Moulding materials according to claim 1, characterised in that component C is used in amounts of 5 to 50 parts by weight.

3. Moulding materials according to claims 1 and 2, characterised in that the graft base B.1 is used in amounts of 20 to 70 parts by weight, and the superimposed graft layer B.2 consists of 80 to 30 parts by weights of the polymerised vinyl monomer B.2.1 to B.2.4.

4. Moulding materials according to claims 1 to 3, characterised in that graft base B.1 consists of crosslinked elastomer particles with an average particle diameter of 0.075 to 1 µm and a glass transition temperature ≦ -20 °C.

5. Moulding materials according to claims 1 to 4, characterised in that component B.1 is polybutadiene or comprises butadiene/styrene copolymers.

6. Moulding materials according to claims 1 to 4, characterised in that component B.1 is polybutadiene.

7. Moulding materials according to claims 1 to 6, characterised in that the superimposed graft layer B.2.3 contains up to 20 parts by weight of B.2.3 and 0.3 to 4 parts by weight of B.2.4, based on 100 parts by weight of B.2.1 and B.2.2.

8. Moulding materials according to claims 1 to 7, characterised in that component B.2.3 is n-butyl acrylate and component B.2.4 is tert.-butyl acrylate.

9. Moulding materials according to claims 1 to 8, characterised in that they additionally contain at least one additive from the group comprising stabilisers, pigments, flow promoters, demoulding agents, flame retardants and anti-static agents.

10. A method of producing the moulding materials according to claims 1 to 9, wherein components A, B and optionally C are mixed in a known manner and are thereafter compounded or extruded as a melt at temperatures of 200 °C to 330 °C in the usual processing units.

11. A method according to claim 10 of producing the moulding materials of claim 9, wherein at least one additive is included from the group comprising stabilisers, pigments, flow promoters, demoulding agents, flame retardants and anti-static agents.

**Revendications**

1. Masses à mouler thermoplastiques, constituées de

A. 20 à 95 parties en poids d'un ou plusieurs polycarbonates thermoplastiques, à base de diphénols de formule (II)

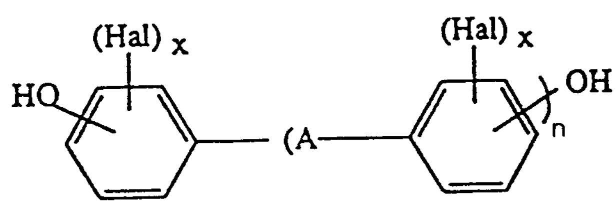 (II)

dans laquelle A est une liaison simple, un alkylène $C_1$-$C_5$, un alkylidène $C_2$-$C_5$, un cycloalkylidène $C_5$-$C_6$, -S- ou -$SO_2$- et Hal représente le chlore ou le brome, X est 0, 1 ou 2 et n est 1 ou 0,

B. 5 à 60 parties en poids d'un ou plusieurs polymères greffés constitués de

B.1 10 à 95 parties en poids d'une base de greffage élastomère sous forme de particules réticulées à base d'un caoutchouc diénique ayant une taille moyenne de particules (valeur $d_{50}$) de 0,05 à 5µm, une température de transition vitreuse inférieure ou égale à 10 °C et

B.2 90 à 5 parties en poids d'un revêtement de greffage en polymère de monomère vinylique, et on obtient le revêtement de greffage par polymérisation de greffage d'un mélange de monomères de

B.2.1 50 à 95 parties en poids de styrène, d'α-méthylstyrène, de styrène substitué sur le noyau ou leurs mélanges, et

B.2.2 50 à 5 parties en poids de (méth)acrylonitrile, méthacrylate de méthyle, anhydride d'acide maléique, maléinimide N-substitué ou leurs mélanges, ainsi que, rapporté à 100 parties en poids de la somme de B.2.1 et B.2.2

B.2.4 0,2 à 8 parties en poids d'un ester butylique tertiaire de l'acide acrylique ou de l'acide méthacrylique, et le cas échéant

B.2.3 2 à 30 parties en poids d'un ester d'acide acrylique aliphatique primaire ou secondaire ayant 2 à 10 atomes de carbone dans la partie alcool de la molécule

en présence de la base de greffage B.1, et le cas échéant

C. 0 à 70 parties en poids d'un copolymère thermoplastique de

C.1 50 à 95 parties en poids de styrène, α-méthylstyrène, styrène substitué sur le noyau, méthacrylate de méthyle ou leurs mélanges, et

C.2 50 à 5 parties en poids de (méth)acrylonitrile, méthacrylate de méthyle, anhydride d'acide maléique, maléinimide N-substitué ou leurs mélanges, la somme des parties en poids de A. + B. et le cas échéant C. représente toujours 100 parties en poids.

**2.** Masses à mouler selon la revendication 1, caractérisées en ce qu'on utilise le composant C en une quantité de 5 à 50 parties en poids.

**3.** Masses à mouler selon les revendications 1 et 2, caractérisées en ce qu'on utilise la base de greffage B.1 en des quantités de 20 à 70 parties en poids, et le revêtement de greffage B.2 en des quantités de 80 à 30 % en poids de polymère de monomère vinylique, B.2.1 à B.2.4.

**4.** Masses à mouler selon les revendications 1 à 3, caractérisées en ce que la base de greffage B.1 est constituée de particules d'élastomère réticulées ayant un diamètre de particules moyen de 0,075 à 1 µm et une température de transition vitreuse ≦ -20 °C.

**5.** Masses à mouler selon les revendications 1 à 4, caractérisées en ce que le composant B.1 est du polybutadiène ou des copolymères butadiène/styrène.

**6.** Masses à mouler selon les revendications 1 à 4, caractérisées en ce que le composant B.1 est du polybutadiène.

**7.** Masses à mouler selon les revendications 1 à 6, caractérisées en ce que le revêtement de greffage B.2 contient 3 à 20 parties en poids de B.2.3 et 0,3 à 4 parties en poids de B.2.4, rapportés à 100 parties en poids de B.2.1 et de B.2.2.

**8.** Masses à mouler selon les revendications 1 à 7, caractérisées en ce que le composant B.2.3 est de l'acrylate de n-butyle et le composant B.2.4 est de l'acrylate de tert-butyle.

**9.** Masses à mouler selon les revendications 1 à 8, caractérisées en ce qu'elles contiennent en plus au moins un additif du groupe des stabilisants, des pigments, des agents d'écoulement, des agents de démoulage, des agents ignifugeants et des agents antistatiques.

**10.** Procédé de production de masses à mouler selon les revendications 1 à 9, dans lequel on mélange de manière connue les composants A., B. et le cas échéant C. et ensuite on mélange par fusion à des températures de 200 °C à 330 °C dans les appareils habituels ou on extrude l'état fondu.

**11.** Procédé de fabrication de masses à mouler de la revendication 9 selon la revendication 10, dans lesquels on incorpore au moins un additif du groupe des stabilisants, des pigments, des agents d'écoulement, des agents de démoulage, des agents ignifugeants et des antistatiques.